# DEMANDE DE BREVET EUROPEEN

(11) **EP 1 992 418 A2**
(43) Date de publication de la demande: **19.11.2008**
(21) Numéro de dépôt: 08155622.7
(22) Date de dépôt: 05.05.2008
(51) Int. Cl.: B05C 9/14

(54) **Machine pour appliquer de la colle et du vernis sur des panneaux de revêtements**

(30) Priorité: 14.05.2007 ES 200701302
(71) Demandeur: Barberan Latorre, Jesús Francisco, 08860 Castelldefels (Barcelona) (ES)
(72) Inventeur: Barberan Latorre, Jesús Francisco, 08860 Castelldefels (Barcelona) (ES)
(74) Mandataire: Cabinet Plasseraud

(57) **Abrégé**

Machine pour appliquer de la colle et du vernis sur des panneaux de revêtements, comprenant un parcours de circulation pour le panneau (1) destiné à recevoir l'application, passant par une étape (4) d'application de colle, par une zone (6) de tassement de la colle appliquée, par une étape (5) d'application de vernis et par une zone (7) de séchage, pour se terminer dans un enroulement sur des bobines (8) de récupération, dans lesquelles se trouvent des rouleaux de passage (9, 10, 11) réfrigérés au moyen de la circulation d'eau à l'intérieur de ceux-ci, afin de diminuer la température du panneau (1) lors du passage par ceux-ci.

## Description

### Domaine technique

La présente invention concerne le revêtement de profilés afin de les doter d'une surface extérieure décorative et protectrice, en proposant une machine pour appliquer de la colle et du vernis sur les panneaux de revêtement pour leur donner une cohérence structurelle.

### État de la technique

On connaît l'application de panneaux de revêtement pour doter les profilés de cadres, moulures etc., d'une surface externe protectrice et décorative.

On connaît également la pratique consistant à appliquer une couche de colle et de vernis sur lesdits panneaux de revêtement, pour donner auxdits panneaux une cohérence structurelle résistante, par exemple pour le revêtement de profilés avec des arêtes vives qui sont sujets aux fissures et aux cassures.

Les panneaux de revêtement se présentent habituellement sous forme de feuille, sur laquelle l'application de la couche de colle et de vernis est réalisée selon un processus continu au moyen d'une machine qui fait circuler la feuille à partir d'une bobine d'alimentation jusqu'à une bobine de récupération, le parcours passant successivement par une étape d'application de colle et par une étape d'application de vernis.

L'application de la colle est réalisée à chaud, ce qui conjointement avec le frottement de la feuille lors du passage sur les rouleaux de guidage, fait que ladite feuille atteint une température élevée qui est préjudiciable au tassement de la colle jusqu'aux conditions adéquates pour la réception du vernis qui est appliqué par la suite, tandis qu'après l'application du vernis un séchage est réalisé avec des étuves à rayonnements ultraviolets, dans lesquelles se produit à son tour un échauffement qui est préjudiciable à l'enroulement de récupération de la feuille.

Compte tenu des échauffements mentionnés de la feuille laminaire au cours du processus de revêtement de colle et du séchage pour la récupération, les machines utilisées pour réaliser ladite application fonctionnent à une faible vitesse (6 à 10 mètres/minute), pour éviter, d'une part, l'augmentation de l'échauffement lié au frottement dans le circuit de guidage, et d'autre part, afin que la durée du parcours permette le refroidissement jusqu'à des températures de processus adéquates, ce qui suppose un faible rendement desdites machines.

### Objet de l'invention

Selon l'invention il est proposé une machine destinée à appliquer de la colle et du vernis en continu sur des panneaux de revêtement esthétique et protecteur de profilés, avec des caractéristiques qui permettent d'exécuter le processus d'application à une vitesse considérablement plus élevée qu'avec les machines conventionnelles.

Cette machine objet de l'invention se caractérise par un guidage du panneau qui reçoit l'application de colle et de vernis en passant sur des rouleaux réfrigérés au moyen de la circulation d'eau à l'intérieur de ceux-ci.

De cette manière, lors de la circulation du panneau au cours du processus dans la machine, il subit un refroidissement à son passage par chacun des rouleaux réfrigérés mentionnés, s'adaptant ainsi rapidement aux conditions de température nécessaires, ce qui permet un processus de circulation rapide (40 à 50 mètres/minute), avec des répercussions bénéfiques sur le rendement de production de la machine.

D'une manière particulière un rouleau réfrigéré de passage du panneau est disposé après l'étape d'application de la colle, où la température du panneau enduit de colle est diminuée, jusqu'à une température adéquate pour le tassement de la colle sous la forme appropriée pour la réception du vernis, un autre rouleau réfrigéré de passage étant disposé après l'étape d'application du vernis, où un refroidissement se produit jusqu'à une basse température adéquate pour l'étape de séchage, et après l'étape de séchage est disposé un autre rouleau réfrigéré de passage, où le refroidissement du panneau se produit dans les conditions adéquates pour le bobinage de récupération de celui-ci.

C'est pourquoi ladite machine objet de l'invention comporte un nombre de caractéristiques tout à fait avantageuses, trouvant ainsi autonomie et caractère préférentiel pour la fonction mentionnée d'application de colle et de vernis sur les panneaux de revêtement de profilés, par rapport aux machines utilisées jusqu'à présent pour cette application.

### Description des figures

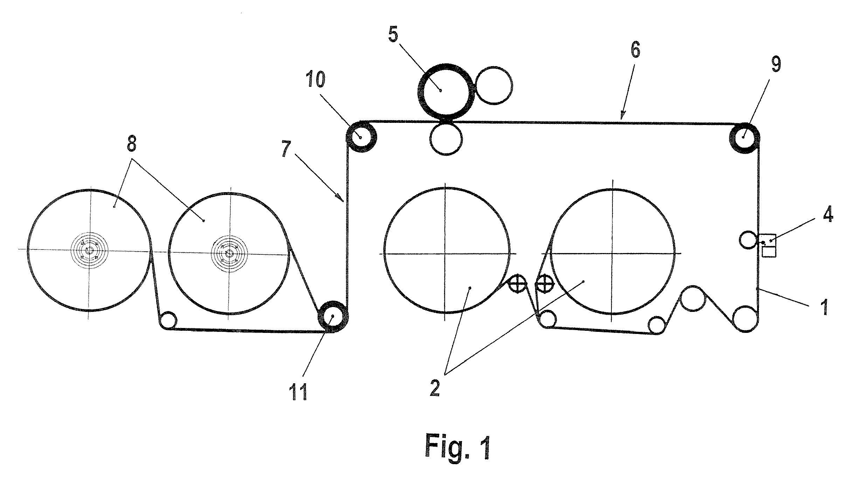

La figure 1 représente un schéma de l'ensemble opérationnel de la machine préconisée.

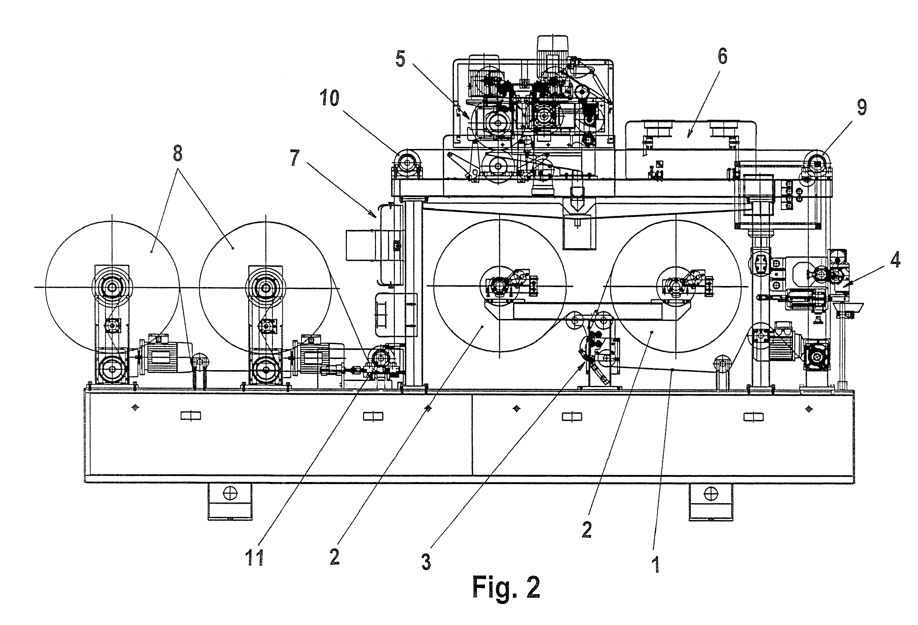

La figure 2 est un mode de réalisation pratique de la machine selon l'invention.

### Description détaillée de l'invention

L'objet de l'invention concerne une machine destinée à appliquer de la colle et du vernis sur des panneaux de revêtement décoratif et protecteur de profilés, avec un mode de réalisation qui permet de mener à bien le processus d'application de colle et de vernis à vitesse élevée par rapport aux machines conventionnelles ayant la même fonction.

La machine préconisée se compose d'un dispositif d'acheminement du panneau 1 destiné à recevoir l'application de colle et de vernis, ledit acheminement étant réalisé à partir d'un porte-bobines qui dispose d'une capacité de deux bobines 2, à partir desquelles un acheminement continu du panneau 1 est possible par l'intermédiaire d'un dispositif de raccordement automatique 3, de façon à ce que lorsque l'une des bobines 2 a terminé son acheminement l'autre le poursuit sans interruption.

Le panneau 1 qui sort des bobines 2 est guidé sur un parcours de circulation passant par un applicateur de colle 4, à partir duquel le panneau 1 enduit de colle est guidé en continu du parcours de circulation jusqu'au passage par un applicateur de vernis 5, le parcours entre les deux applicateurs 4 et 5 passant par une zone 6 de tassement de la colle afin qu'elle parvienne à un état adéquat pour la réception du vernis.

Après l'application du vernis, le panneau 1 enduit de colle et de vernis passe par une zone 7 de séchage, dans laquelle la couche appliquée sur le panneau 1 mentionné est séchée au moyen d'étuves à rayonnements ultraviolets, pour la récupération ultérieure de celui-ci dans des bobines d'enroulement 8 dont l'agencement est également prévu pour la récupération en continu, de façon à ce que lorsqu'une bobine 8 a terminé son parcours la récupération se poursuit dans une autre sans interruption.

Étant donné que l'application de la colle sur le panneau 1 au moyen de l'applicateur 4 est réalisée à une température élevée, tandis que le processus de tassement de la colle pour la réception du vernis nécessite une température sensiblement inférieure, et que durant le processus de séchage au moyen d'étuves à rayonnements ultraviolets un échauffement important se produit à son tour, tandis que pour l'enroulement du panneau dans les bobines de récupération 8 une température sensiblement basse est nécessaire, selon l'invention un système de réfrigération est incorporé à la machine, pour le refroidissement du panneau 1 dans les points critiques du parcours de circulation dans la machine.

Ledit système de réfrigération se caractérise par des rouleaux réfrigérés au moyen de la circulation d'eau à l'intérieur de ceux-ci, un rouleau réfrigéré 9 étant disposé dans un point du parcours de passage du panneau 1 entre l'application de colle au moyen de l'applicateur 4 et la zone 6 de tassement de la colle pour la réception du vernis.

De cette manière, la température (environ 180 °C) à laquelle se trouve le panneau 1 pour l'application de la colle au moyen de l'applicateur 4, diminue lors du passage par le rouleau réfrigéré 9 jusqu'à environ 50 °C arrivant ainsi à la zone 6 dans les conditions adéquates pour le tassement de la colle.

Dans le parcours de passage du panneau 1 entre l'application du vernis au moyen de l'applicateur 5 et la zone 7 de séchage, est disposé un autre rouleau réfrigéré 10 au passage duquel la température du panneau 1 diminue jusqu'à environ 30 °C, arrivant ainsi à la zone 7 dans des conditions optimales pour le séchage.

Après ladite zone 7 de séchage, dans laquelle le panneau atteint une température de 70 à 80 °C, est disposé un autre rouleau réfrigéré 11, au passage duquel la température du panneau 1 diminue de nouveau jusqu'à environ 30 à 40 °C, qui représente une température adéquate pour l'enroulement dans les bobines 8 de récupération.

L'ensemble de cet agencement permet au parcours de circulation continue du panneau 1 dans la machine, passant par le processus d'application de colle au moyen de l'applicateur 4, par la zone 6 de tassement de la colle, par le processus d'application de vernis au moyen de l'applicateur 5 et par la zone de séchage 7, pour se terminer dans les bobines 8 de récupération finale, de se dérouler à une vitesse relativement élevée (40 à 50 mètres/minute), par rapport à la vitesse (6 à 10 mètres/minute) des machines conventionnelles utilisées pour cette application.

## Revendications

1. Machine pour appliquer de la colle et du vernis sur des panneaux de revêtements, du type qui se **caractérise par** une circulation continue du panneau objet de l'application, passant par une étape d'application de colle et par une étape d'application de vernis, avec une zone de tassement de la colle avant l'application du vernis et une zone de séchage postérieur à ladite application du vernis, qui est finalement récupéré dans un enroulement, **caractérisée en ce qu'**au cours de la circulation du panneau (1) sur lequel est réalisée l'application de la colle et du vernis, est utilisé un système de réfrigération constitué de rouleaux réfrigérés au moyen de la circulation d'eau à l'intérieur de ceux-ci, sur lesquels rouleaux réfrigérés s'effectue le passage du panneau (1) dans les points qui nécessitent une diminution de la température du panneau pour le parcours des différentes étapes du processus dans la machine.

2. Machine pour appliquer de la colle et du vernis sur des panneaux de revêtements, selon la revendication 1, **caractérisée en ce qu'**après l'application de la colle sur le panneau (1) s'effectue le passage du panneau (1) enduit de colle, par un rouleau réfrigéré (9), au moyen duquel un refroidissement se produit pour le tassement de la colle dans une zone de circulation ultérieure (6) préalable à l'application du vernis.

3. Machine pour appliquer de la colle et du vernis sur des panneaux de revêtements, selon la revendication 1, **caractérisée en ce qu'**après l'application du vernis s'effectue le passage du panneau (1) enduit de colle et de vernis, par un rouleau réfrigéré (10), au moyen duquel un refroidissement se produit pour le parcours du panneau (1) sur une zone ultérieure (7) de séchage.

4. Machine pour appliquer de la colle et du vernis sur des panneaux de revêtement, selon la revendication 1, **caractérisée en ce qu'**avant la récupération finale le panneau (1) recouvert de colle et de vernis passe par un rouleau réfrigéré (11), au moyen duquel un refroidissement se produit pour l'enroulement dudit panneau (1) lors de la récupération.
